# EUROPEAN PATENT APPLICATION

(11) **EP 0 955 226 A2**
(43) Date of publication of application: **10.11.1999**
(21) Application number: 99303525.2
(22) Date of filing: 05.05.1999
(51) Int. Cl.: B62D 7/14, B60P 1/34

(54) **A dumper vehicle**

(30) Priority: 05.05.1998 GB 9809367
(71) Applicant: THWAITES LIMITED, Warwickshire CV32 7NQ (GB)
(72) Inventor: Golding, Kenneth, Kenilworth, Warwickshire CV8 1BZ (GB)
(74) Representative: Croston, David

(57) **Abstract**

A dumper vehicle comprises a chassis 12 having a load carrying skip 66, front and rear wheels 16, 20 steerable about respective substantially vertical steering axes 28, 30, and a fluid operable ram 54 for steering the front and rear wheels. The ram 54 is mounted on the chassis 12 and forms part of a steering link 48 which extends diagonally across the vehicle. The dumper further comprises a lifting assembly on the chassis which is arranged to elevate the skip relative to the chassis.

The dumper is preferably arranged so that the skip is arranged forwards of the rear wheels and an engine for driving the dumper is arranged to the rear of the rear wheels, the skip extending rearwardly beyond a point substantially midway between the front and rear wheels.

## Description

The invention relates to a dumper vehicle.

Dumper vehicles are manufactured in various sizes to cater for applications ranging from small building sites to large scale road building. One of the problems faced by designers of dumper vehicles is that of ensuring stability of the vehicle particularly when the vehicle is being steered when driving over uneven ground or on a steep camber.

The problem can be more difficult to overcome in small dumper vehicles of the kind used on small building sites where users require a fairly substantial skip to carry material whilst the vehicle itself must remain of small size to be sufficiently manoeuvrable in such locations.

Previously, such vehicles have frequently comprised front and rear chassis sections which steer about an interconnecting articulated centre pivot. That particular arrangement does not easily lend itself to small dumpers as the front and rear axles need to be fairly close together and the inner wheels of the vehicle would tend to move too close together during steering thereby reducing stability and particularly so when negotiating a sharp corner.

An object of the present invention is to provide a dumper vehicle having improved stability.

According to one aspect of the invention there is provided a dumper vehicle comprising a chassis having a load carrying skip, front and rear wheels steerable about respective substantially vertical steering axes, and a fluid operable ram for steering the front and rear wheels, the ram being mounted on the chassis and forming part of a steering link extending diagonally across the vehicle.

With such an arrangement, the stability problem outlined is substantially avoided.

The wheels are preferably mounted for steering by the steering link about respective kingpins defining the axes of steering. Mountings for the front wheels may be provided with respective arms interconnected by a track rod and one of the mountings may be provided with a steering arm. Mountings for the rear wheels may be similarly arranged with the rear steering arm diagonally opposed to the front steering arm. The steering link preferably interconnects the front and rear steering arms.

The ram preferably has its cylinder mounted on the chassis and the piston rod forms part of the steering link. In such a case, the piston rod may project from each end of the cylinder and the ends of the piston rod are preferably connected to ends of respective link members. Preferably, one of the link members connects the front steering arm to one end of the piston rod and the other of the link members connects the rear steering arm to the other end of the piston rod.

In order to provide good stability, the centre of gravity of the dumper should be kept as low as possible. In order to do that the load carrying skip of the dumper should be mounted on the chassis so as to be as low as possible. However, when the skip is positioned at low level, dumping its contents on to a surface higher than ground level, for example, into a truck or over a wall, can be a problem. In accordance with the present invention, the skip is preferably mounted on lift means which can elevate the skip relative to the chassis. By lifting the skip in that way, the problem of dumping the skip contents higher than ground level is much reduced.

According to a second aspect of the invention there is provided a dumper comprising a chassis lift means on the chassis and a load carrying skip mounted on the lift means, the lift means being arranged to elevate the skip relative to the chassis.

In a preferred embodiment, the lift means lifts the skip and moves it forwards relative to the chassis. That may be achieved by providing the lift means as a parallelogram arm arrangement, the arms being pivotally connected to the chassis at respective first ends and pivotally connected to the skip at respective second ends. The pivotal connection between the first ends of the arms and the chassis is preferably arranged forward of the pivotal connection between the second ends of the arms and the skip.

Preferably, the skip has a lower surface substantially level with the chassis when in its normal non-elevated position. The lower surface of the skip is preferably flat. The skip may be mounted on a sub-chassis and the lift means preferably interconnects the chassis and the sub-chassis. The skip is preferably pivotally mounted for tipping on the sub-chassis. The sub-chassis preferably fits between opposite longitudinal members of the chassis when the skip is in its normal non-elevated position.

In order to enhance stability of the dumper, the skip is preferably arranged forwards of the rear wheels of the dumper and an engine for the dumper is arranged to the rear of the rear wheels, the skip extending rearwardly beyond a point substantially midway between the front and rear wheels. In that way, the weight of the engine helps to balance the weight of the loaded skip more effectively thereby improving stability.

According to a third aspect of the invention there is provided a dumper comprising a chassis having a load carrying skip, front and rear wheels and an engine for driving the dumper, the skip being arranged forwards of the rear wheels and the engine being arranged to the rear of the rear wheels, the skip extending rearwardly beyond a point substantially midway between the front and rear wheels.

The load carrying skip is preferably mounted on lift means as aforesaid to enable the skip to be elevated. The positioning of the engine behind the rear wheels significantly enhances stability of the vehicle when the skip is elevated.

Preferably, the skip is positioned such that, when loaded, the centre of gravity thereof lies behind the ground contact patches of the front wheels.

Preferably, the engine is disposed transverse of the chassis.

A dumper vehicle in accordance with the invention will now be described by way of example with reference to the accompanying drawings in which:
Figure 1 is a diagrammatic elevation of a dumper in accordance with the invention showing the skip in normal and tipped positions;
Figure 2 is as plan view of part of a dumper shown in Figure 1 and illustrating a steering mechanism;
Figure 3 is a view of part of a steering mechanism shown in Figure 2 in a different position;
Figure 4 is an elevation of a lifting mechanism for the skip of the dumper shown in Figure 1.
Figure 5 is a plan view of the dumper chassis; and
Figure 6 is a plan view to a larger scale of sub-chassis for a skip of the dumper.

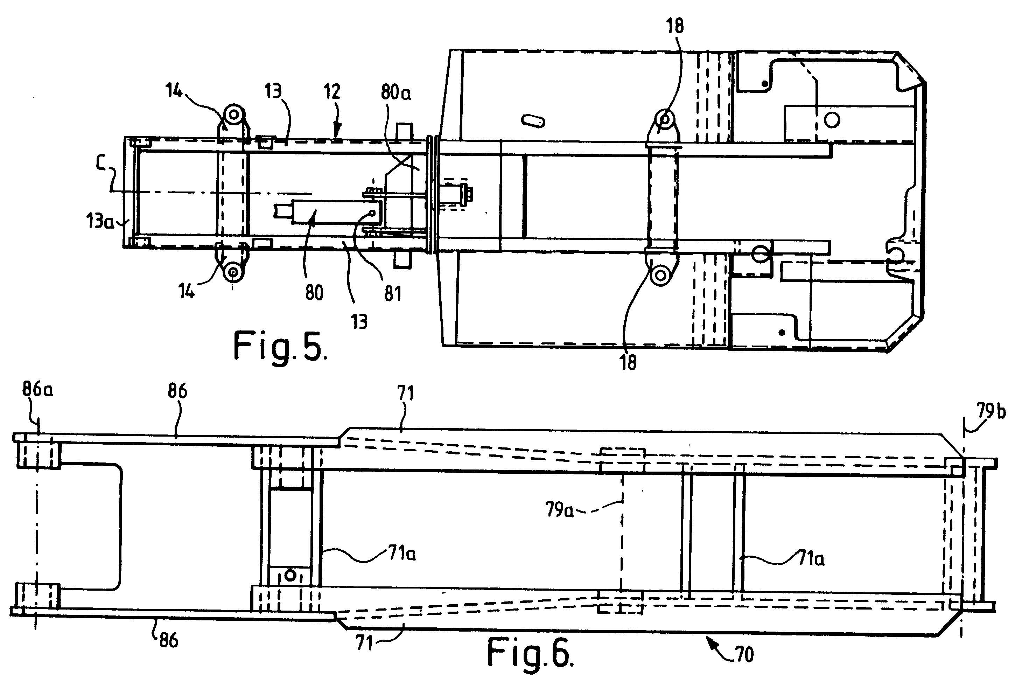

A dumper comprises a chassis 12 having front and rear chassis sections, each section comprising generally two longitudinal main chassis members 13 which are interconnected by a series of transverse chassis members for example 13a, 80a (Figure 5) to provide a rigid chassis section. The front and rear chassis sections are linked together so as to allow limited relative movement to take place so as to provide a two piece oscillating chassis 12.

The chassis 12 carries front supports 14 (Figure 5) for front wheels 16 of the vehicle and also carries rear supports 18 for rear wheels 20 of the vehicle. The rear wheels 20 are powered by an engine 22 which is mounted transversely of the chassis 12 to the rear of the rear wheel 20. Drive from the engine 22 is transmitted via a suitable transmission such as a hydraulic pump to four hydraulic wheel-driving motors.

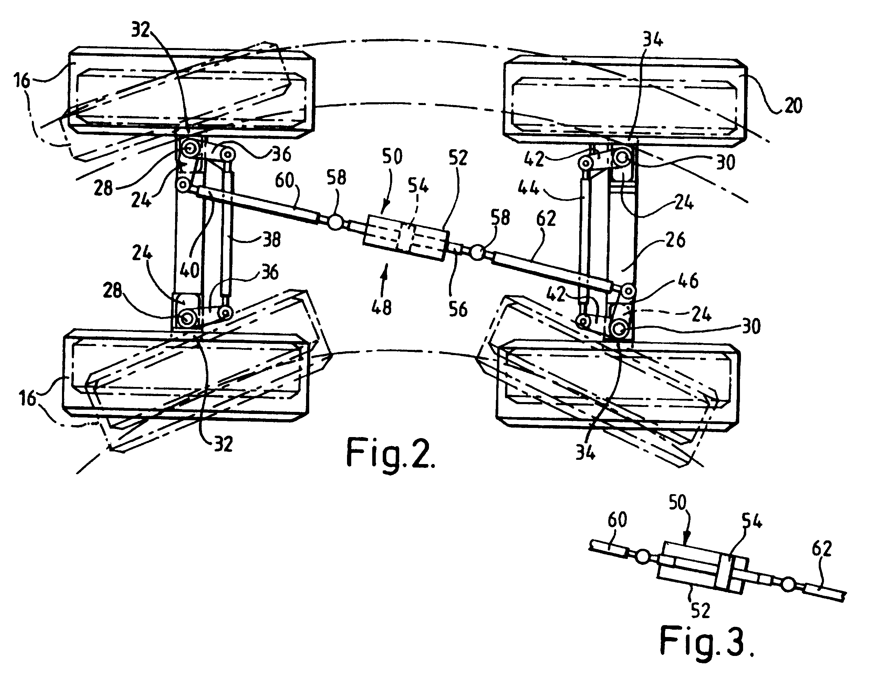

Referring to Figures 2 and 3, the front and rear supports 14, 18 carry respective substantially vertical king pins 28, 30. The king pins 28,30 pivotally support respective mountings 32, 34 for the wheels 16, 20 and motors 24, Figure 2, illustrating larger and smaller sets of wheels. The front wheel mountings 32 have respective arms 36 interconnected by a track rod 38. The arms 36 converge towards each other to provide an Ackermann angle. One of the front wheel mountings 32 also has a steering arm 40. The rear wheel mountings 34 also have respective arms indicated at 42 which are interconnected by a track rod 44. The arms 42 also converge to provide an Ackermann angle identical to the front wheel Ackermann angle. One of the rear wheel mountings 34 has a steering arm 46 which is diagonally opposite the front wheel steering arm 40. The two steering arms 40, 46 are pivotally interconnected by a steering link indicated generally at 48. The steering link 48 comprises a double-acting hydraulic ram 50 comprising a cylinder 52 housing a piston 54. The piston 54 is driveably connected to a piston rod 56 which extends from each end of the cylinder 52. The piston rod 56 carries a universal coupling 58 at each of its ends through which it is connected to the inner ends of respective front and rear link members 60, 62. The outer ends of the link members 60, 62 are pivotally connected to the front and rear steering arms 40,46. The cylinder 52 is suitably mounted on a cross member (not shown) of the chassis 12.

In use, the vehicle is steered by introducing fluid into one end of cylinder 52, for example the left-hand end as viewed in Figure 2, thereby causing the piston 54 to move to the right as shown in Figure 3. In that way, the link members 60,62 turn the steering arms 40 thereby causing the wheels to steer about vertical axes of pivoting defined by the king pins 28, 30 as shown in Figure 2. In Figure 2, the top right-hand wheel 20 is not shown in its steered position for clarity. In order to steer the wheels 16, 20 in the opposite direction, fluid is introduced in the opposite end of the cylinder 52 to move the piston to the left.

The hydraulic fluid is supplied by a pump (not shown) driven by the engine 22 and operation of a steering wheel 64 on the vehicle by a driver 65 controls flow of hydraulic fluid to and from the cylinder 52 to effect steering.

Use of a single ram 50 is particularly useful in that the steered wheels will remain synchronised with each other at all times. Also, the use of single steering link 48 is a particularly compact arrangement most useful when designing a small dumper vehicle. Moreover, by steering the wheels as shown in Figures 2 and 3, the ground contact patches P of the front and rear wheels 16,20 on each side of the vehicle remain spaced apart sufficiently so as not to introduce any significant adverse effects on vehicle stability. The steering on the vehicle is therefore advantageous over an articulated centre pivot arrangement as described earlier.

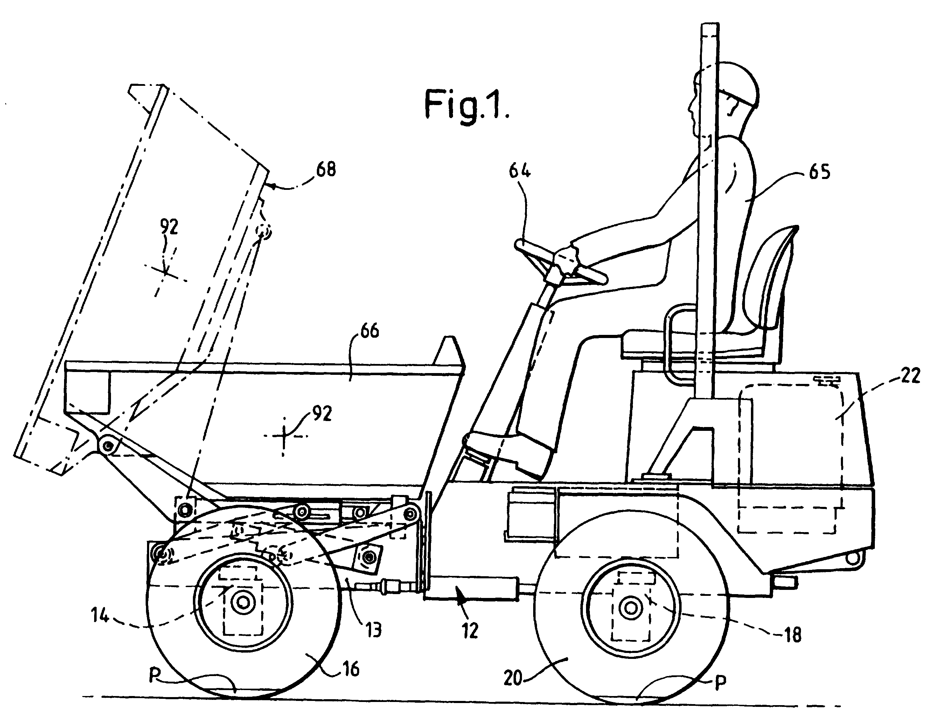

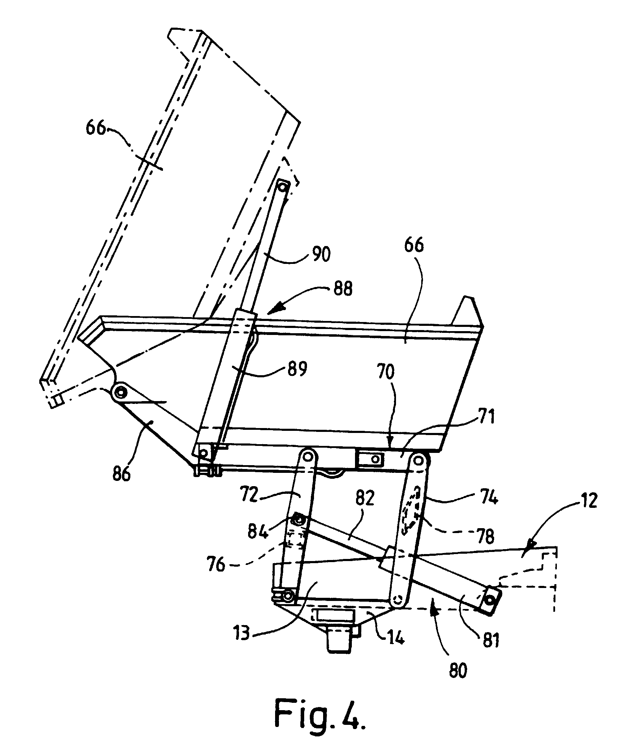

As shown in Figures 1 and 4, the chassis 12 carries a skip 66. Its lower surface 68 is generally level with the chassis 12 so that the centre of gravity of the vehicle is kept as low as possible. The arrangement results in a particularly stable vehicle.

The skip 66 is mounted on a sub-chassis 70 comprising parallel side members 71 and interconnecting cross-members 71a (Figure 6).

The front of the chassis 12 pivotally supports two sets of parallelogram arms 72, 74, the sets being spaced apart equally one each side of the longitudinal centreline C (Figure 5) of the vehicle. The arms 72 nearest the front of the vehicle are interconnected by a cross-member 76 and a rear arms 74 are interconnected by a cross member 78. Each set of arms is pivotally connected at its upper end to one of the side members 71 of the sub chassis 70. The lower pivot for each arm is positioned forwardly of its upper pivot. The front arms 72 pivot about an axis 79a at their upper ends and the rear arms 74 about an axis 79b (see Figure 6).

A lifting ram 80 has one end of its cylinder 81 pivotally connected to the cross member 80a of the chassis 12 and a piston rod 82 of the ram 80 is pivotally connected to suitable mounting 84 extending between the two front parallelogram arms 72. In Figure 1, the lifting ram 80 is shown in its retracted state with the skip 66 in its lowest position and with the sub-chassis 70 lying between the side members 13 of the chassis 12. Figure 4 shows the lifting ram 80 in its extended condition in which it lifts the skip 66 upwardly and forwardly.

The skip 66 is pivotally connected at its front end through two upwardly extending parallel arms 86 mounted on the sub-chassis 70. A tipping ram 88 has its cylinder 89 pivotally connected to the sub-chassis 70 and its piston rod 90 pivotally connected to the underside of the skip 66. Extension of the ram 88 causes the skip 66 to tip on the arms 86 about an axis 86a to discharge any material therein.

By providing the parallelogram arms 72, 74 the skip 66 can be lifted so as to deposit its load at a raised level e.g. into a truck or over a wall. It will be noted from Figure 1 that even in the tipped position, the centre of gravity indicated at 92 in Figure 1 of the loaded skip acts only a short distance ahead of the ground contact patches P of the front wheel 16. When the skip is raised as shown in Figure 4 and then tipped, the centre of gravity 92 moves further forwards but is more than balanced by the weight of the engine 22 arranged behind the rear wheels 20, thereby ensuring fore and aft stability.

## Claims

1. A dumper vehicle comprising a chassis having a load carrying skip, front and rear wheels steerable about respective substantially vertical steering axes, and a fluid operable ram for steering the front and rear wheels, the ram being mounted on the chassis and forming part of a steering link extending diagonally across the vehicle.

2. A dumper vehicle according to claim 1 in which the wheels are mounted for steering by the steering link about respective kingpins defining the axes of steering.

3. A dumper vehicle according to claim 1 in which mountings for the front wheels are provided with respective arms interconnected by a track rod and one of the mountings is provided with a steering arm.

4. A dumper vehicle according to claim 3 in which mountings for the rear wheels are provided with respective arms interconnected by a track rod and one of the mountings is provided with a steering arm, with the rear steering arm diagonally opposed to the front steering arm.

5. A dumper vehicle according to claim 4 in which the steering link interconnects the front and rear steering arms.

6. A dumper vehicle according to any preceding claim in which the ram has its cylinder mounted on the chassis and the piston rod forms part of the steering link.

7. A dumper vehicle according to claim 6 in which the piston rod projects from each end of the cylinder and the ends of the piston rod are preferably connected to ends of respective link members.

8. A dumper vehicle according to claim 7 when dependent upon claim 5 in which one of the link members connects the front steering arm to one end of the piston rod and the other of the link members connects the rear steering arm to the other end of the piston rod.

9. A dumper comprising a chassis, lift means on the chassis and a load carrying skip mounted on the lift means, the lift means being arranged to elevate the skip relative to the chassis.

10. A dumper according to claim 9 in which the lift means lifts the skip and moves it forwards relative to the chassis.

11. A dumper according to claim 10 in which the lift means comprises a parallelogram arm arrangement, the arms being pivotally connected to the chassis at respective first ends and pivotally connected to the skip at respective second ends, the pivotal connection between the first ends of the arms and the chassis being arranged forward of the pivotal connection between the second ends of the arms and the skip.

12. A dumper according to any of claims 9 to 12 in which the skip has a lower surface substantially level with the chassis when in its normal non-elevated position.

13. A dumper according to claim 12 in which the lower surface of the skip is flat.

14. A dumper according to any of claims 9 to 13 in which the skip is mounted on a sub-chassis and the lift means interconnects the chassis and the sub-chassis.

15. A dumper according to claim 14 in which the skip is pivotally mounted for tipping on the sub-chassis.

16. A dumper according to claim 14 or 15 in which the sub-chassis fits between opposite longitudinal members of the chassis when the skip is in its normal non-elevated position.

17. A dumper according to any of claims 9 to 16 in which the skip is arranged forwards of the rear wheels of the dumper and an engine for the dumper is arranged to the rear of the rear wheels, the skip extending rearwardly beyond a point substantially midway between the front and rear wheels.

18. A dumper comprising a chassis having a load carrying skip, front and rear wheels and an engine for driving the dumper, the skip being arranged forwards of the rear wheels and the engine being arranged to the rear of the rear wheels, the skip extending rearwardly beyond a point substantially midway between the front and rear wheels.

19. A dumper according to claim 18 in which the load carrying skip is mounted on lift means to enable the skip to be elevated.

20. A dumper according to claim 19 in which the skip is positioned such that, when loaded, the centre of gravity thereof lies behind the ground contact patches of the front wheels.

21. A dumper according to claim 18, 19 or 20 in which the engine is disposed transverse of the chassis.
